# EUROPEAN PATENT SPECIFICATION

(11) **EP 1 366 973 B1**
(45) Date of publication and mention of the grant of the patent: **29.09.2010**
(21) Application number: 03007280.5
(22) Date of filing: 31.03.2003
(51) Int. Cl.: B62K 5/04

(54) **Oscillation type vehicle**
Seitlich neigbares Fahrzeug
Véhicule inclinable latéralement

(30) Priority: 30.05.2002 JP 2002157843
(43) Date of publication of application: 03.12.2003
(73) Proprietor: HONDA GIKEN KOGYO KABUSHIKI KAISHA, Minato-ku Tokyo (JP)
(72) Inventor: Ieda, Yoshihisa c/o Kabushiki Kaisha Honda Gijutsu Kenkyusho, Wako-shi, Saitama (JP)
(74) Representative: Liska, Horst

(56) References cited:
- JP-A- 59 120 586
- JP-B2- 61 032 196
- US-A- 4 356 876
- US-A- 4 448 436

## Description

The present invention relates to oscillation control in an oscillation type vehicle.
As the oscillation type vehicle, there is a vehicle which stabilizes turning running when going around curves in such a manner that for example, a front body and a rear body rock from side to side each other during running.
Since, however, when the front body or the rear body rocks at the time of a stop, the vehicle does not become self-sustainable and the driver must maintain so as not to fall down by putting his foot on the ground, if both bodies are made integral with each other so as not to rock each other, the vehicle will be able to self-sustain.
According to an example described in Japanese Utility Model Publication No. 63-45361, in an oscillation type three-wheeled vehicle, oscillation of a coupling portion between the front body and the rear body is regulated by operating a parking lever.
Also, according to an example described in Japanese Patent Publication No. 61-32196, the rear wheel brake is operated and at the same time, oscillation regulating devices of the front body and the rear body are simultaneously operated by operating the braking lever.
Further, there is an example (Japanese Patent Laid-Open No. 59-120586) in which relative oscillation between the front body and the rear body is electronic-controlled in accordance with the vehicle speed.
In the same example, the oscillation is regulated starting with comparatively fast vehicle speed during deceleration.

In the case of an example (the Japanese Utility Model Publication No. 63-45361) in which the oscillation of a coupled portion between the front body and the rear body is regulated by operating the parking lever, when decelerating for a stop, it is necessary to operate a braking lever for a stop, thereafter to move the hand off the braking lever, and to operate another parking lever for regulating the oscillation, and further when re-starting after the stop, to operate the parking lever.
The driver is requested to perform plural operations in order as described above.

Also, in the case of an example (Japanese Patent Publication No. 61-32196) in which rear wheel braking and oscillation regulation is performed at the same time by operating the braking lever, it may be difficult to change the course during running while decelerating by operating the brake.

In the example (Japanese Patent Laid-OpenNo. 59-120586) in which the relative oscillation between the front body and the rear body is electronic-controlled in accordance with the vehicle speed, since the oscillation is regulated starting with comparatively fast vehicle speed, it may be difficult to perform a change in the course and the like during running while decelerating, and the system structure becomes complicated, resulting in an increase in cost in terms of ensuring reliability.

US-A-448,436 discloses an oscillation type vehicle in accordance with the preamble of claim 1. A similar vehicle is shown in US-A-4,356,876.

The present invention has been achieved in views of the above-described points, and is aimed to provide an oscillation type vehicle having excellent operability in control of braking and oscillation when braking/stopping and re-starting, easy to change the course during running while braking, and not requiring any complicated system.

In order to achieve the above-described object, an oscillation type vehicle equipped with an oscillation mechanism is provided in accordance with claim 1.

When the braking mechanism is operated by a braking operation for braking for a stop, the oscillation fixing mechanism is operated to fix the relative oscillation of the oscillation mechanism, and therefore, the oscillation mechanism is also controlled only by the braking operation, and the operability of control in the braking mechanism and the oscillation mechanism when braking/stopping and further re-starting is excellent.

Since the oscillation fixing control mechanism controls to prevent the fixing of the oscillation mechanism due to the oscillation fixing mechanism from being performed during running while braking, the course during running while braking can be also easily changed.

Since a portion of a braking control force of the braking mechanism is exerted on the oscillation fixing mechanism to fix the oscillation, there is no need for separately providing a power source for actuating the oscillation fixing mechanism, but the structure can be simplified for miniaturization.

Since during braking, the braking mechanism is going to stop with the operation unit exerted on the wheels, the operation unit and the mechanism retaining unit retaining this unit have been biased in the forward rotation direction of the wheel, and this braking torque is greater than a portion of the braking control force that is going to rotate the mechanism retaining unit in the opposite direction to the forward rotation direction of the wheel. When, however, the wheel stops at the time of a stop, the braking torque becomes nearly zero, a portion of the braking control force acts to rotate the mechanism retaining unit in the opposite direction to the forward rotation direction of the wheel, and the oscillation fixing mechanism can be actuated to fix the oscillation of the oscillation mechanism.

Since, by only operating the brake lever, the driver is capable of braking and also regulating and fixing the oscillation mechanism when the wheel stops, the operability is excellent.

Even in re-starting after the stop, by only releasing the brake lever, it is possible to start running in a state in which the fixing on the oscillation mechanism has been released.

For the oscillation fixing control mechanism, the mechanical control is adopted instead of the electronic control system, and a simple, low-priced system can be provided.

Preferably, the braking control force of the aforesaid braking mechanism is based on hydraulic pressure.

Since the braking control force is obtained based on the hydraulic pressure, excellent braking is obtained and the oscillation fixing controlling can be performed in compact structure.

Preferably, the aforesaid braking mechanism is a hydraulic type disk braking mechanism in which a caliper bracket which is the mechanism retaining unit retains a caliper piston which is the operation unit, and in which the caliper piston operates to brake with a disk plate which is integral with the wheel sandwiched.

A portion of the braking hydraulic pressure is caused to bias the caliper bracket in the opposite direction to the forward rotation direction of the wheel, and at the time of deceleration for a stop, the oscillation fixing mechanism can be operated to fix the oscillation of the oscillation mechanism.

The present oscillation regulating means can be easily incorporated in the hydraulic type disk braking mechanism as described above.

Preferred embodiments of the invention will be explained with regard to the attached drawings.
Fig. 1 is a side view showing schematic structure of an oscillation type automatic three-wheeled vehicle according to one embodiment of the present invention;
Fig. 2 is a side view showing an oscillation mechanism and an oscillation fixing mechanism;
Fig. 3 is a side view showing a hydraulic type disk brake mechanism and an oscillation fixing control mechanism;
Fig. 4 is a schematic view for the oscillation fixing control mechanism;
Fig. 5 is a schematic view for the oscillation fixing control mechanism applied to a hydraulic type drum brake mechanism according to another embodiment;
Fig. 6 is a schematic view for the oscillation fixing control mechanism applied to a mechanical type drum brake mechanism according to further another embodiment; and
Fig. 7 is the same schematic view for another state.

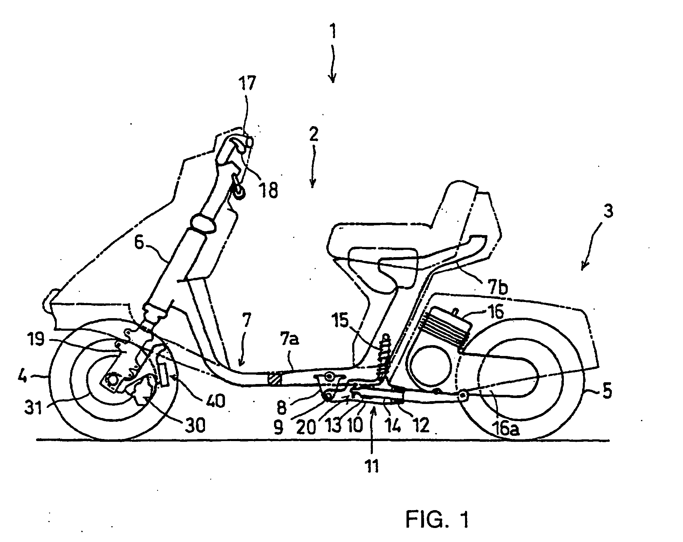

Hereinafter, with reference to Figs. 1 to 4, the description will be made of an embodiment according to the present invention.
The present embodiment relates to an oscillation type automatic three-wheeled vehicle 1, and the vehicle body is divided into a front body 2 having one running front wheel 4, and a rear body 3 having two driving rear wheels 5, 5 from side to side.

The front body 2 is featured in such a manner that a body frame 7 extending downward from a head pipe 6 is bent backward horizontally to form a step portion 7a, and that further in the rear portion, the body frame 7 rises up obliquely upward to form a seat portion 7b at the top end.

On a coupled bracket 8 integrally projectingly provided on the step portion 7a of the body frame 7, a joint case 10 is provided in such a manner as to be freely rockable vertically with its front end pivotally supported through the medium of a pivot shaft 9.

Within the joint case 10, there are provided a bearing 12 and a Neidhart mechanism 13, an oscillating shaft 14 protruding forward from the other rear shaft 3 is inserted into the joint case 10 from behind such that it is supported by the bearing 12 in such a manner as to be freely rockable (rotatable), and is engaged with a Neidhart mechanism 13, and the front body 2 and the rear body 3 are coupled through an oscillation mechanism 11 composed of: the bearing 12 within the joint case 10, the Neidhart mechanism 13 and the oscillation shaft 14.

The front body 2 and the rear body 3 are coupled through the bearing 12 in such a manner as to be freely rockable each other from side to side, and are biased such that both are elastically restored to a neutral state by the Neidhart mechanism 13.

Between the joint case 10 and the body frame 7, a shock absorber 15 is interposed to absorb vertical oscillations of the rear body 3.
The rear body 3 is mounted with an internal combustion engine 16, and the rear wheels 5, 5 are driven through a deceleration mechanism 16a.

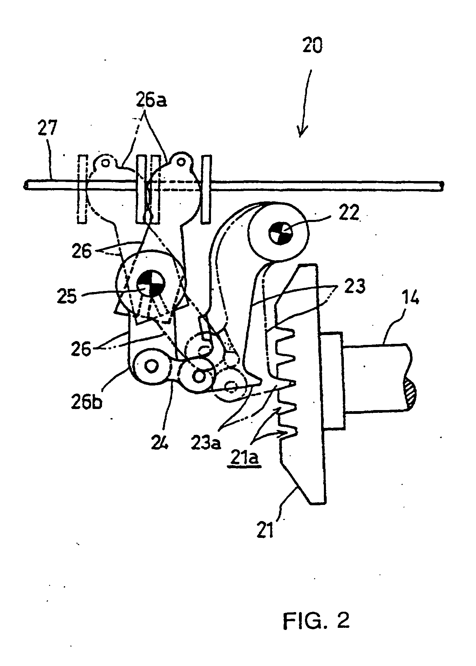

In the front part within the joint case 10, there is provided an oscillation fixing mechanism 20.
As shown in Fig. 2, at the front end of the oscillating shaft 14, a swing lock plate 21 is integrally fixed, and the swing lock plate 21 with its outer peripheral edge extending forward is formed with about five restraining grooves 21a in its partial necessary portion.

Toward the front of the swing lock plate 21, a restraining member 23 pivotally mounted on a pin 22 is disposed such that its restraining protrusion 23a can be restrained by the restraining groove 21a, and the restraining member 23 is coupled to one end 26b of an arm member 26 pivotally mounted on a pin 25 through a link member 24.
The other end 26a of the arm member 26 is engaged with the oscillation fixing cable 27.
The oscillation fixing cable 27 is biased to the right in Fig. 2 by biasing means although not shown.

When the oscillation fixing cable 27 is pulled in a free state in which the restraining member 23 is not restrained by the swing lock plate 21 as indicated by a solid line in Fig. 2, the arm member 26 rotates as indicated by a chain double-dashed line, the restraining member 23 rocks through the link member 24 so that the restraining protrusion 23a can be restrained by the restraining groove 21a of the swing lock plate 21 to lock the oscillations of the oscillating shaft 14.

In other words, the relative oscillation from side to side between the front body 2 and the rear body 3 is inhibited and fixed.

A brake mechanism of the front wheel 4 of the present oscillation type automatic three-wheeled vehicle 1 is a hydraulic type disk braking mechanism 30. A brake caliper 32 is mounted to a front fork 19 for axially supporting the front wheel 4, and a caliper piston 32a to be driven by hydraulic pressure sandwiches a disk plate 31, which rotates integrally with the front wheel 4 through a pad 32b for braking.

In the upper part of a steering shaft supported by a head pipe 6 of the front body 2 in such a manner as to be freely rotatable, along one of steering wheels 17, 17 developed from side to side, there is provided a front brake lever 18, and the structure is arranged such that by operating the front brake lever 18, the piston of a master cylinder (not shown) is pressed to supply hydraulic pressure to the brake caliper 32 for actuating the caliper piston 32a to apply the brakes.

The brake caliper 32 is integrally fixed to a caliper bracket 41. The caliper bracket 41 is structured such that the lower end portion 41a thereof is pivotally mounted to a front axle 4a at the lower end of the front fork 19 to be supported in such a manner as to be freely rockable around the front axle 4a, and the upper end portion 41b is elastically supported through a tension spring 42 interposed between the front fork 19 and the caliper bracket 41.

On a protruded portion 41c of the caliper bracket 41, there is fixed a secondary cylinder 43 . A piston rod 43a slidably inserted in this secondary cylinder 43 is its proximal end portion is pivotally mounted, through a pin 45, on a supporting bracket 44, the proximal end portion of which has been integrally projectingly provided on the front fork 19.

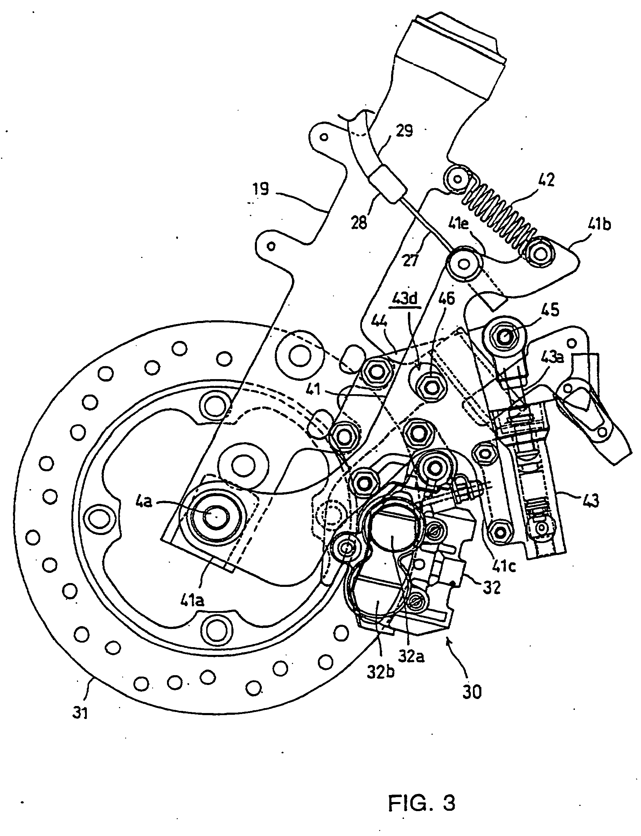

To the secondary cylinder 43, one portion of hydraulic pressure to be supplied to the brake caliper 32 is adapted to be supplied. Since this hydraulic pressure biases the piston rod 43a in a pushing-out direction, the secondary cylinder 43 which is rockable is biased in a clockwise direction in Fig. 3 together with the caliper bracket 41 against the tension spring 42 because of the piston rod 43a pivotally mounted on the body side.

At the central portion of the caliper bracket 41, there has been formed a slotted hole 43d, and a stopper pin 46 projectingly provided on the supporting bracket 44 has been inserted in the slotted hole 43d to regulate an oscillation range of the caliper bracket 41 to a small angle required.

Thus, the oscillation fixing cable 27 is connected to a flexed portion 41e in the upper part of the caliper bracket 41.
The oscillation fixing cable 27 is slidably inserted into a cable outer 29 from a cable holder 28, and is redirected to the oscillation fixing mechanism 20 to be coupled to the arm member 26 (See Fig. 2).

As described above, an oscillation fixing control mechanism 40 is composed of the caliper bracket 41, the secondary cylinder 43 and the like.

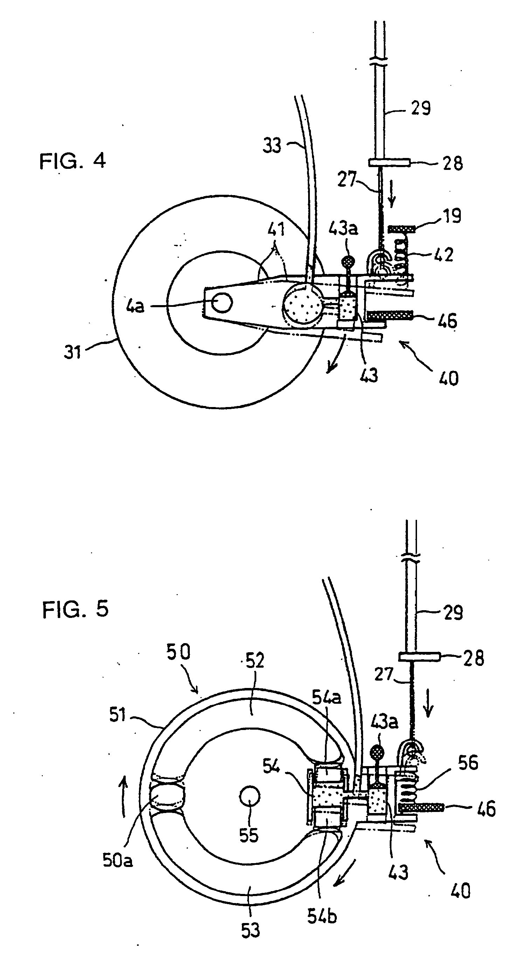

Fig. 4 shows this oscillation fixing control mechanism 40 as a schematic diagram for the sake of clarity.

Referring to Fig. 4, during ordinary running, the caliper bracket 41 is biased in a counterclockwise direction by the tension spring 42 to be in a state, indicated by a solid line, in which it is in contact with the stopper pin 46.

When the front brake lever 18 is gripped by the driver here and the hydraulic pressure is supplied to the brake caliper 32 through a brake hose 33 by the master cylinder, the caliper piston 32a starts and brakes so as to sandwich the disk plate 31 through the pad 32b for deceleration.

Braking torque by this brake caliper 32 biases the caliper bracket 41 for supporting the brake caliper 32 in a counterclockwise direction to maintain a state, indicated by a solid line, in which the caliper bracket 41 has come into contact with the stopper pin 46.

A portion of the hydraulic pressure is also supplied to the secondary cylinder 43 to bias the caliper bracket 41 in a clockwise direction because of the piston rod 43a pivotally mounted on the body side, but the braking torque is greater, and the caliper bracket 41 is to maintain a state, indicated by a solid line, in which it has come into contact with the stopper pin 46.

When the vehicle stops from a decelerated state by braking and the disk plate 31 stops together with the front wheel 4, the braking torque by the brake caliper 32 reduces to nearly zero, the biasing force due to the secondary cylinder 43 surpasses to somewhat reverse the direction of rotation of the front wheel 4, and rocks the caliper bracket 41 in a clockwise direction as indicated by a chain double-dashed line in Fig. 4 for pulling the oscillation fixing cable 27.

When the oscillation fixing cable 27 is pulled, the oscillation fixing mechanism 20 starts as described above, the restraining member 23 rocks to cause the restraining protrusion 23a to restrain in the restraining groove 21a of the swing lock plate 21 for locking the oscillation of the oscillating shaft 14, and relative oscillation from side to side between the front body 2 and the rear body 3 is inhibited and fixed.

While the front brake lever 18 is being gripped after the stop, the front wheel 4 is in a braked state due to the brake caliper 32, a locked state of the oscillation mechanism 11 is maintained, and relative oscillation from side to side between the front body 2 and the rear body 3 is inhibited.

Thus, when the front brake lever 18 is released with an attempt to re-start, the braking due to the brake caliper 32 is released; at the same time, the hydraulic pressure to the secondary cylinder 43 also lowers; the caliper bracket 41 rocks in a counterclockwise direction in Figs. 3 and 4 due to the tension spring 42 to come into contact with the stopper pin 46; the oscillation fixing cable 27 is drawn in to also release the locking of the oscillation mechanism 11; and relative oscillation from side to side between the front body 2 and the rear body 3 becomes free.

As described above, when temporarily stopping, the present oscillation type automatic three-wheeled vehicle 1 is capable of simply executing each of the previously described processes for re-starting by operating only the front brake lever 18 after a series of processes: braking, stopping, locking of the oscillation mechanism 11, release of the braking, and release of locking of the oscillation mechanism 11 from ordinary running, and has exceedingly excellent operability.

In other words, the driver grips the front brake lever 18 for deceleration and braking; before stopping the vehicle, the oscillation mechanism 11 is not locked, but it is possible to easily change the course during running while braking; when the vehicle is stopped, the oscillation mechanism 11 is locked and relative oscillation from side to side between the front body 2 and the rear body 3 is inhibited; and they are made integral with each other and it is possible to cause the body to self-sustain without the driver putting his foot on the ground each occasion; and when the front brake lever 18 is released, the oscillation mechanism 11 is unlocked and the vehicle can be started in a state in which the relative oscillation from side to side between the front body 2 and the rear body 3 has been set free.

Since a portion of the hydraulic pressure that is a braking control force of the hydraulic type disk brake mechanism 30 is exerted on the oscillation fixing control mechanism 40 to lock the oscillation mechanism 11, there is no need for separately providing a power source for actuating the oscillation fixing control mechanism 40, but the structure can be simplified for miniaturization.
As described above, for the oscillation fixing control mechanism 40, the mechanical control is adopted instead of the electronic control system, and a simple, low-priced system can be provided and the oscillation fixing control mechanism 40 can be constructed compact.

Since the oscillation mechanism 11 is automatically locked when the front wheel 4 is braked by operating the front brake lever 18, when stopping during running on a downward slope, hydraulic pressure input for locking the oscillation mechanism 11 is increased by an amount corresponding to braking force required, but the same effect can be exhibited without being different in terms of function.

Also, if the front brake lever 18 is gripped when rolling backward on an upward slope, the front wheel 4 will be braked and the braking torque will rock the caliper bracket 41 in a clockwise direction in Figs. 3 and 4 to pull the oscillation fixing cable 27 so that the oscillation mechanism 11 will be locked to maintain a self-sustainable state which is easy to operate.
The rear brake-lever is capable of braking the rear wheel as usual.

In the above-described embodiments, the braking mechanism has been applied to the hydraulic type disk brake mechanism 30, but can be also applied to a hydraulic type drum brake mechanism, an example of which is shown in Fig. 5.
This is the structure in which the oscillation fixing control mechanism 40 has been applied to the hydraulic type drum brake mechanism 50, a schematic diagram of which is Fig. 5.
The aforesaid oscillation fixing mechanism 20 and oscillation mechanism 11 will be utilized as they are.

The drum brake mechanism 50 is structured in such a manner that a pair of semi-ring-shaped brake shoes 52, 53, one end each of which is supported by a fulcrum pin 50a are disposed on a brake panel 51, and that a wheel cylinder 54 fixed to the brake panel 51 is sandwiched and arranged between the other ends of the brake shoes 52, 53.

A drum (not shown) which rotates integrally with the front wheel although not shown is provided on the outer periphery of the brake shoes 52, 53.
The wheel cylinder 54 presses a pair of pistons 54a, 54b by hydraulic pressure in a direction that separates each of them from each other to expand the brake shoes 52, 53 for coming into contact with the inner peripheral surface of the drum to brake by their frictional forces.

A portion of hydraulic pressure to be supplied to this wheel cylinder 54 is supplied to the secondary cylinder 43 of the oscillation fixing control mechanism 40 (the same symbols as in the aforesaid embodiment will be used).
The brake panel 51 corresponds to the caliper bracket 41, and is provided in such a manner that it comes into contact with the stopper pin 46 and is capable of rocking at a small angle required around the front axle 55.
In the present embodiment, a compression spring 56 corresponding to the tension spring 42 is interposed between the brake panel 51 and the stopper pin 46 to conduct the same workings.

During ordinary running, the drum brake mechanism 50 is in a state indicated by a solid line in Fig. 5, and when the brake lever is operated, hydraulic pressure is supplied to the wheel cylinder 54 to expand the brake shoes 52, 53 for deceleration and braking. A state indicated by a solid line is maintained because the braking torque is great.

Thus, when the vehicle stops and the front wheel stops, the biasing force due to the secondary cylinder 43 surpasses to somewhat reverse the direction of rotation of the front wheel 4, and rocks the brake panel 51 in a clockwise direction as indicated by a chain double-dashed line in Fig. 5 for pulling the oscillation fixing cable 27. The oscillation fixing mechanism 20 is actuated to lock the oscillation mechanism 11.

Since even in the present embodiment, the same operation is performed as in the aforesaid embodiment as described above, the same effect can be exhibited.

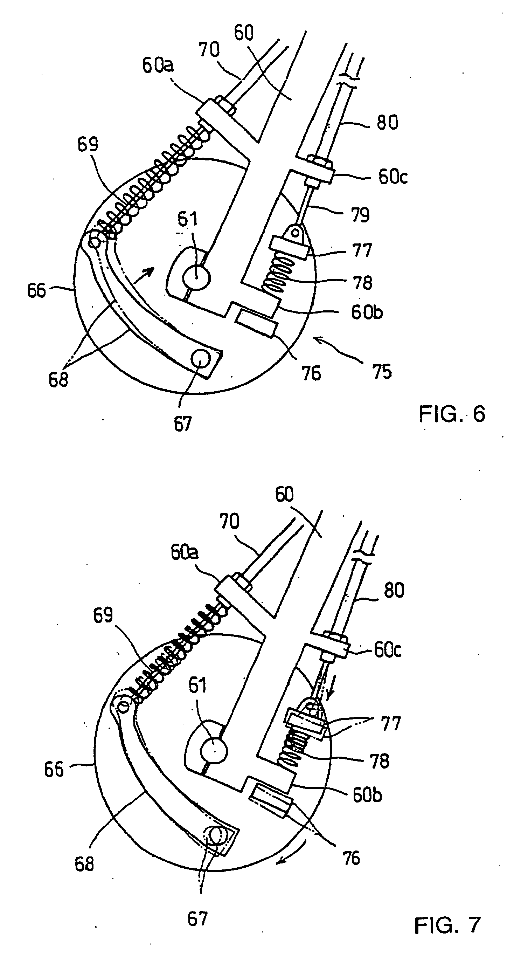

Next, with reference to Figs. 6 and 7, the description will be made of another embodiment applied to the mechanical drum brake mechanism 65.
It is assumed that the aforesaid oscillation fixing mechanism 20 and oscillation mechanism 11 are utilized as they are.

The front wheel (not shown) is axially supported on the front fork 60 through the front axle 61, the drum (not shown) rotates integrally with the front wheel, and braking is performed by the brake shoes (not shown) provided within the drum being expanded.

The disk-shaped brake panel 66 is pivotally supported by the front axle 61, and rotation of the working cam of a cam shaft 67 inserted into the brake panel 66 acts to expand the brake shoes.
The proximal end portion of the brake arm 68 is fitted and fixed to this cam shaft 67.

The end portion of the cable outer 70 of the brake cable 69 is fixed to a cable holder 60a protruding forward from the central position of the front fork 60, and the brake cable 69, one end of which is connected to the front brake lever (not shown) protrudes from the end portion fixed to the cable holder 60a guided by the cable outer 70 for being connected to the tip end of the brake arm 68.

On the other hand, an oscillation fixing control mechanism 75 is structured in such a manner that torque receiving units 76, 77 are projectingly provided on a brake panel 66 at an appropriate interval so as to sandwich a panel stopper 60b protruding backward from the lower end of the front fork 60, and that a compression spring 78 is interposed between the upper torque receiving unit 77 and the panel stopper 60b.

The end portion of a cable outer 80 of the oscillation fixing cable 79 is fixed to a cable holder 60c protruding backward from the central position of the front fork 60, and the oscillation fixing cable 79, one end of which has been connected to an input portion (such as the arm member 26 in the aforesaid embodiment) of the oscillation fixing mechanism (not shown) protrudes from the end portion fixed to the cable holder 60c guided by the cable outer 80 to be connected to the torque receiving unit 77.

During ordinary running, the compression spring 78 biases the brake panel 66 in a counterclockwise direction (forward rotation direction) in Fig. 6 to be in a state, indicated by a solid line in Fig. 5, in which the torque receiving unit 76 has come into contact with the panel stopper 60b. When the brake lever is operated, the brake cable 69 is pulled to rock the brake arm 68 (state indicated by a chain double-dashed line in Fig. 6, by a solid line in Fig. 7), the cam shaft 67 is rotated, the brake shoes are expanded for deceleration and braking, and since the braking torque is great, the brake panel 66 maintains a state indicated by a solid line.

Thus when the vehicle stops and the front wheel stops, the braking torque becomes nearly zero, a portion of the braking control force that pulls the brake cable 69 surpasses to rotate the brake panel 66 in a clockwise direction as indicated by a chain double-dashed line in Fig. 7 for pulling the oscillation fixing cable 79, and operates the oscillation fixing mechanism 20 to lock the oscillation mechanism 11.

Since it also operates in the same manner as the aforesaid embodiment, the present embodiment can exhibit the same effect.
This can be applied to the complete mechanical drum brake mechanism 65 which uses no hydraulic pressure, and the structure of the oscillation fixing control mechanism as well as the braking mechanism is further simplified, miniaturized and cost-reduced, and can effect highly reliable control.

In the above-described embodiments, there has been used the oscillation fixing mechanism 20 in which the swing lock plate 21 which is integral with the oscillating shaft 14 is restrained by the restraining member 23, for fixing the relative oscillation between the front body 2 and the rear body 3, but it is possible to easily apply to an oscillation fixing mechanism using such a mechanical frictional force as when the oscillation fixing cable is pulled in the same structure as the drum brake mechanism, the cam rotates to expand the brake shoes for fixing the drum which is integral with the oscillating shaft by a frictional force, and other various oscillation fixing mechanisms using hydraulic pressure, or using an electromagnetic force, or others.

Also, the present invention can be applied to not only a vehicle which is divided into the front body and the rear body and in which they are coupled so as to be rockable from side to side each other, but also vehicles in which there is provided an oscillation mechanism between the vehicle body and the power source, and between the vehicle body and a wheel suspension unit, and the like, and vehicles in which there is provided the oscillation fixing mechanism in various positions. Also, it can be applied to a two-wheeled vehicle having an oscillation mechanism, a three-wheeled vehicle having two front wheels and one rear wheel, and automobiles having four or more wheels.

There will be provided an oscillation type vehicle having excellent operability of control in braking and oscillation when braking/stopping and further re-starting, easy to change the course during running while braking, and requiring no complicated system.

## Claims

1. An oscillation type vehicle equipped with an oscillation mechanism (11) comprising:
an oscillation fixing mechanism (20) for fixing relative oscillation of the oscillation mechanism (11);
a braking mechanism (30; 50) for braking a front wheel (4) or rear wheel (5) by operating a brake lever (18); and
an oscillation fixing control mechanism (40) for fixing relative oscillation of said oscillation mechanism (11) by actuating said oscillation fixing mechanism (20) when the wheel stops by said braking mechanism (30; 50);
wherein said oscillation fixing control mechanism (40) exerts a portion of a braking control force of said braking mechanism (30; 50) on said oscillation fixing mechanism (20) to fix the oscillation;
**characterized in that** said braking mechanism (30; 50) is provided in such a manner that a mechanism retaining unit (41; 51) for retaining an operation unit (32a; 54a, b) is capable of rotating at a small angle required in a rotation direction of the wheel (4; 5),
that said oscillation fixing control mechanism (40) is structured in such a manner that a portion of a braking control force of said braking mechanism (30; 50) biases said mechanism retaining unit (41; 51) in an opposite direction to a forward rotation direction of the wheel, and that when the wheel braked stops, the portion of said braking control force causes said mechanism retaining unit (41; 51) to rotate in a direction opposite to the forward rotation direction of the wheel, whereby said oscillation fixing mechanism (20) is actuated to fix oscillation of said oscillation mechanism (11).

2. The oscillation type vehicle according to claim 1,
**characterized in that** the braking control force of said braking mechanism (30; 50) is based on hydraulic pressure.

3. The oscillation type vehicle according to claim 2,
**characterized in that** said braking mechanism (30) is a hydraulic type disk braking mechanism (30) in which a caliper bracket (41) which is a mechanism retaining unit (41) retains a caliper piston (32a) which is an operation unit (32a), and in which said caliper piston (32a) operates to brake with a disk plate (31) which is integral with the wheel (4) sandwiched.

## Patentansprüche

1. Mit einem Schwingmechanismus (11) ausgestattetes Schwingfahrzeug, umfassend:
einen Schwingfixierungsmechanismus (20) zum Fixieren einer relativen Schwingung des Schwingmechanismus (11); und
einen Bremsmechanismus (30; 50) zum Bremsen eines Vorderrads (4) oder Hinterrads (5) durch Betätigung eines Bremshebels (18); und
einen Schwingfixiersteuermechanismus (40) zum Fixieren der relativen Schwingung des Schwingmechanismus (11) durch Betätigung des Schwingfixierungsmechanismus (20), wenn das Rad durch den Bremsmechanismus (30; 50) stoppt;
worin der Schwingfixiersteuermechanismus (40) einen Anteil einer Bremssteuerkraft des Bremsmechanismus (30; 50) auf den Schwingfixierungsmechanismus (20) ausübt, um das Schwingen zu fixieren;
**dadurch gekennzeichnet, dass** der Bremsmechanismus (30; 50) derart vorgesehen ist, dass eine Mechanismushalteeinheit (41; 51) zum Halten einer Betätigungseinheit (32a; 54a, b) mit einem in einer Drehrichtung des Rads (4; 5) erforderlichen kleinen Winkel drehbar ist,
dass der Schwingfixierungsmechanismus (40) derart strukturiert ist, dass ein Anteil einer Bremssteuerkraft des Bremsmechanismus (30; 50) die Mechanismushalteeinheit (41, 51) in einer einer Vorwärtsdrehrichtung des Rads entgegengesetzten Richtung vorspannt, und dass dann, wenn das gebremste Rad stoppt, der Anteil der Bremssteuerkraft bewirkt, dass sich die Mechanismushalteeinheit (41; 51) in einer der Vorwärtsdrehrichtung des Rads entgegengesetzten Richtung dreht, wodurch der Schwingfixiersteuermechanismus (20) aktiviert wird, um das Schwingen des Schwingmechanismus (11) zu fixieren.

2. Das Schwingfahrzeug nach Anspruch 1,
**dadurch gekennzeichnet, dass** die Bremssteuerkraft des Bremsmechanismus (30; 50) auf Hydraulikdruck beruht.

3. Das Schwingfahrzeug nach Anspruch 2,
**dadurch gekennzeichnet, dass** der Bremsmechanismus (30) ein hydraulischer Scheibenbremsmechanismus ist, worin ein Bremssattelträger (41), der eine Mechanismushalteeinheit (41) ist, einen Bremssattelkolben (32a), der eine Betätigungseinheit (32a) ist, hält, und worin der Bremssattelkolben (32a) mit einer dazwischen aufgenommenen mit dem Rad (4) integrierten Bremsscheibe (31) die Bremsung bewirkt.

## Revendications

1. Véhicule inclinable latéralement, équipé d'un mécanisme d'oscillation (11) comprenant :
un mécanisme de blocage d'oscillation (20), pour bloquer toute oscillation relative du mécanisme d'oscillation (11) ;
un mécanisme de freinage (30 ; 50) pour freiner une roue avant (4) ou une roue arrière (5) par actionnement d'un levier de frein (18) ; et
un mécanisme de commande de blocage d'oscillation (40), pour bloquer toute oscillation relative dudit mécanisme d'oscillation (11) par actionnement dudit mécanisme de blocage d'oscillation (20), lorsque la roue s'immobilise sous l'effet dudit mécanisme de freinage (30 ; 50) ;
dans lequel ledit mécanisme de commande de blocage d'oscillation (40) applique une partie d'une force de commande de freinage dudit mécanisme de freinage (30 ; 50) sur ledit mécanisme de blocage d'oscillation (20) de manière à bloquer l'oscillation ;
**caractérisé en ce que** ledit mécanisme de freinage (30 ; 50) est prévu de manière qu'une unité de retenue de mécanisme (41 ; 51), pour retenir une unité d'actionnement (32a ; 54a, b), soit capable de tourner de la valeur d'un petit angle nécessaire dans un sens de rotation de la roue (4 ; 5),
**en ce que** ledit mécanisme de commande de blocage d'oscillation (40) est construit de manière qu'une partie d'une force de commande de freinage dudit mécanisme de freinage (30 ; 50) sollicite ladite unité de retenue de mécanisme (41 ; 51) dans un sens opposé à un sens de rotation en avant de la roue, et
**en ce que**, lorsque la roue freinée s'immobilise, la partie de ladite force de commande de freinage provoque la rotation de ladite unité de retenue de mécanisme (41 ; 51) dans un sens opposé au sens de rotation en avant de la roue, de manière que ledit mécanisme de blocage d'oscillation (20) soit actionné pour bloquer l'oscillation dudit mécanisme d'oscillation (11).

2. Véhicule inclinable latéralement selon la revendication 1,
**caractérisé en ce que** la force de commande de freinage dudit mécanisme de freinage (30 ; 50) est basée sur une pression hydraulique.

3. Véhicule inclinable latéralement selon la revendication 1,
**caractérisé en ce que** ledit mécanisme de freinage (30) est un mécanisme de freinage par disque (30) de type hydraulique, dans lequel un support d'étrier (41), qui est une unité de retenue de mécanisme (41), retient un piston d'étrier (32a) qui est une unité d'actionnement (32a), et dans lequel ledit piston d'étrier (32a) agit pour freiner avec une plaque de disque (31) solidaire de la roue (4) prise en sandwich.
